(19) Europäisches Patentamt
European Patent Office
Office européen des brevets

(11) Veröffentlichungsnummer: **0 168 022**
**A2**

# (12) EUROPÄISCHE PATENTANMELDUNG

(21) Anmeldenummer: **85108472.3**

(22) Anmeldetag: **09.07.85**

(51) Int. Cl.⁴: **C 01 B 17/05**
C 25 B 1/24

(30) Priorität: **10.07.84 LU 85457**

(43) Veröffentlichungstag der Anmeldung:
**15.01.86 Patentblatt 86/3**

(84) Benannte Vertragsstaaten:
**BE DE FR GB IT LU NL**

(71) Anmelder: **EUROPÄISCHE ATOMGEMEINSCHAFT (EURATOM)**
**Bâtiment Jean Monnet Plateau du Kirchberg Boîte Postale 1907**
**L-1019 Luxembourg(LU)**

(72) Erfinder: **Schütz, Günter, Dr.**
**JRC ISPRA**
**I - 21020 Ispra(IT)**

(74) Vertreter: **Weinmiller, Jürgen**
**Zeppelinstrasse 63**
**D-8000 München 80(DE)**

## (54) Verfahren zur Erzeugung von Wasserstoff und Schwefel aus Schwefelwasserstoff.

(57) Ein Verfahren zur Zersetzung von $H_2S$ in Wasserstoff und Schwefel, wobei $H_2S$ mit Brom in Berührung gebracht wird, das entstehende HBr in einem Elektrolyseverfahren in Wasserstoff und Brom zersetzt wird und das entstandene Brom im Kreislauf wieder mit $H_2S$ in Berührung gebracht wird.

./...

EP 0 168 022 A2

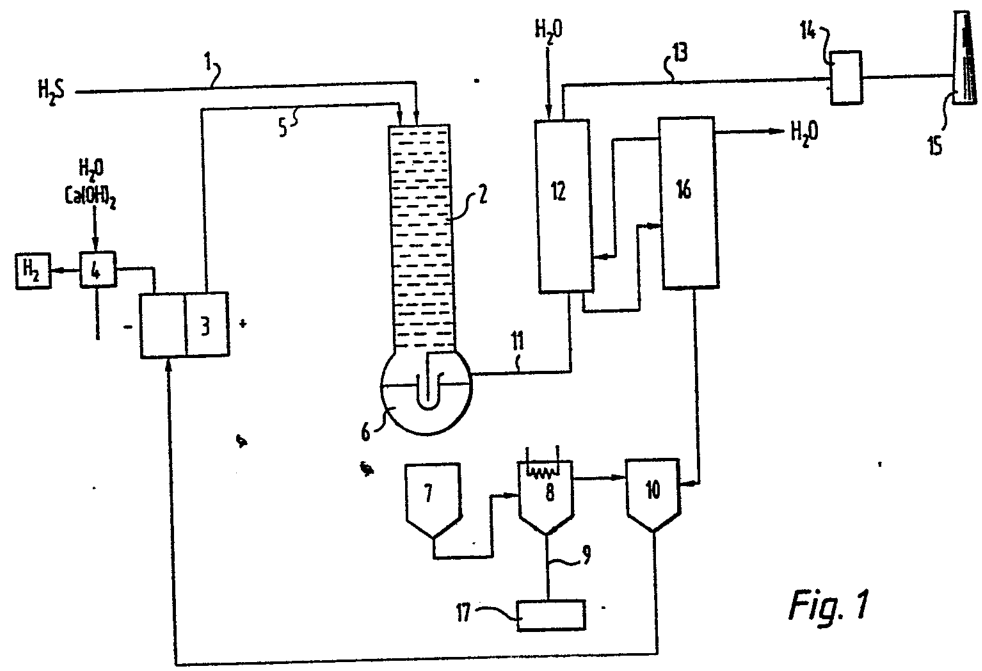


Fig. 1

0168022

# Verfahren zur Erzeugung von Wasserstoff und Schwefel aus Schwefelwasserstoff

Die Erfindung bezieht sich auf ein Verfahren zur Erzeugung von Wasserstoff und Schwefel aus Schwefelwasserstoff bzw. schwefelwasserstoffhaltigen Gasen mithilfe einer Kombination einer elektrolytischen und einer chemischen Reaktion.

Bei zahlreichen technischen Prozessen fallen schwefelwasserstoffhaltige Gase an, die heute fast immer zu elementaren Schwefel verarbeitet werden (siehe z.B. Ullmann's Enzyklopedie der technischen Chemie, 1982, Bd. 21, Seite 11). Dabei entstehen große Wärmemengen, die zwar zum größten Teil zur Erzeugung von Dampf benutzt werden, die aber meistens nicht erwünscht sind. Der Wasserstoff des Schwefelwasserstoffs geht dabei in Wasser über, das als Reaktionsprodukt wertlos ist. Bei dem ständig steigenden Wasserstoffbedarf, z.B. in den Raffinerien, wäre es jedoch von Vorteil, den Schwefelwasserstoff in die Bestandteile Wasserstoff und Schwefel zu spalten.

Aufgabe der Erfindung ist es, ein Verfahren zur Herstellung von Wasserstoff und Schwefel aus Schwefelwasserstoff oder Schwefelwasserstoff enthaltenden Gasen anzugeben, das bei niedrigeren Temperaturen und mit geringen zu investierenden Wärmemengen arbeitet und eine vollständige Umsetzung des Schwefelwasserstoffs ergibt.

Diese Aufgabe wird durch die in den unabhängigen Ansprüchen definierten Verfahren gelöst. Bezüglich von Merkmalen bevorzugter Ausführungsformen der Erfindung wird auf die Unteransprüche verwiesen.

Prinzipiell beruht das erfindungsgemäße Verfahren auf der Anwendung der Bromwasserstoffelektrolyse. Diese erlaubt die Herstellung eines chemischen Stoffes, nämlich des Broms, der schon bei Zimmertemperatur und noch schneller bei leicht erhöhten Temperaturen

./.

(50 bis 100°C) leicht mit Schwefelwasserstoff sowohl in der flüssigen Phase als auch in der Dampfphase nach folgender Gleichung reagiert :

$Br_2 + H_2S \longrightarrow 2HBr + S$ Absorption, Dampfphasenreaktion

$2\,HBr \longrightarrow Br_2 + H_2$ Elektrolyse

Der dabei entstehende Bromwasserstoff wird wieder in eine Elektrolysezelle zurückgeführt. In dieser wird 35 bis 48%ige Bromwasserstoffsäure bei Temperaturen von vorzugsweise 50 bis 100°C zersetzt. Es entsteht an der Kathode Wasserstoff und an der Anode Brom, das sich sofort in der Bromwasserstoffsäure löst. Die bromhaltige Lösung wird in eine Reaktionskolonne geleitet, wo sie mit dem Schwefelwasserstoff bzw. mit dem Schwefelwasserstoff enthaltenden Gas reagiert. Dabei fällt feinverteilter Schwefel an. Außerdem wird die ursprüngliche Bromwasserstoffkonzentration, die an den Elektroden abnimmt, wieder hergestellt.

Die Teilchengröße des Schwefels ist vor allem von der Konzentration der Bromwasserstoffsäure und der Temperatur abhängig. Außerdem kann sie durch Zusätze im Elektrolyten beeinflußt werden. Bei niedrigen Temperaturen (25 bis 40°C) und mittleren Konzentrationen der Säure erfolgt die Sedimentation der Teilchen im Sumpf der Kolonne wesentlich leichter, so daß eine Trennung des Elektrolyten vom Schwefel ohne allzu großen Aufwand möglich ist. Die Wirtschaftlichkeit des Verfahrens ist aber in diesem Bereich durch die sich ergebenden Energiekosten nicht immer gesichert. Außerdem kommt es zu einer starken Korrodierung der Anode, was wegen der hohen Zellkosten unbedingt vermieden werden muß. Bei den für ein optimales Verfahren notwendigen Temperaturen von 70 bis 100°C und Säurekonzentrationen oberhalb 40% ergeben sich durch klebrige Schwefelaggregate bedingte Betriebsstörungen, die bisher immer schon ein großes verfahrenstechnisches Problem ähnlicher Verfahren waren, siehe z.B. die Zeitschrift "Gas und Wasserfach", 1931, Vol. 74, Seite 653.

Die Anwendung der Bromwasserstoffelektrolyse zur Spaltung von Schwefelwasserstoff hat, von der großen Reaktivität des dabei produzierten Broms einmal abgesehen, noch den großen Vorteil, daß sich solche Betriebsstörungen leicht vermeiden bzw. dadurch beheben lassen, daß man mit einem Bromüberschuß fährt, und zwar entweder zeitweise mit einem deutlichen oder über längere Zeit mit einem geringen Überschuß. Dabei reagiert der Schwefel nach folgender Gleichung :

$$S + 3Br_2 + 4H_2O \longrightarrow H_2SO_4 + 6HBr$$

und geht dabei in Lösung. Oberhalb 80°C verläuft die Reaktion genügend schnell. Dabei werden zwar geringe Mengen Schwefelsäure gebildet, die Störung aber beseitigt. Die Schwefelsäure, deren Bildung sich auch sonst nicht immer ganz vermeiden läßt, wird in einem späteren Arbeitsschritt mit Calciumcarbonat, Calciumoxid oder Calciumhydroxid bzw. Calciumbromid, welches eventuell aus der Abgasreinigung erhalten werden kann, als Gips ausgefällt, der gewaschen und, falls keine Verwendung dafür vorhanden ist, deponiert wird. Die destillative Abtrennung der Schwefelsäure ist wegen der geringen Konzentration unwirtschaftlich. Zur Trennung des Schwefels von der Elektrolytlösung sind normalerweise große Absetzbehälter notwendig. Man kommt aber schon mit einem wesentlich kleineren Absetzbehälter aus, wenn man hinter diesen eine Druckkammer setzt, die auf 120 bis 130°C erhitzt wird. Dabei kann eine glatte und genügend schnelle Trennung der Schwefelsuspension in eine klare Elektrolytflüssigkeit und flüssigen Schwefel erreicht werden. Die aus dem Waschreaktor austretenden entschwefelten Gase werden in einer Waschkolonne bei ca. 50 bis 70°C mit Wasser von Bromwasserstoffsäure freigewaschen. Der Waschkolonne schließt sich noch eine Destillationskolonne an, in der die im Sumpf der Waschkolonne anfallende verdünnte Bromwasserstoffsäure aufkonzentriert wird.

Mit diesem Verfahren sind hohe Entschwefelungsgrade erzielbar, die die gesetzlich festgesetzten Grenzen weit unterschreiten. Bei Versuchen ergaben sich Schwefelrestanteile von 30 mg in einem $m^3$ Abgas. Bei der zusätzlichen Verwendung einer mit grobem Calciumoxid oder Calciumcarbonatstücken oder Kalkmilch gefüllten Kolonne konnte ein praktisch bromwasserstoff- und schwefelwasser-

./.

stofffreies Abgas erhalten werden. Die verbrauchte Reinigungsmasse wird zur Fällung der bei dem Prozeß anfallenden Schwefelsäure benutzt. Um Schwierigkeiten bei der Abtrennung des feinverteilten Schwefels zu umgehen, kann man auch das bei der Elektrolyse entstehende Brom entweder abdestillieren, oder man kann durch den Anolyten Luft oder ein anderes Gas leiten, das dabei mit Brom gesättigt wird. Das gasförmige Brom bzw. das bromhaltige Gas wird dann bei 120 bis 150°C in der Gasphase mit Schwefelwasserstoff oder dem schwefelwasserstoffhaltigen Gas zur Reaktion gebracht, wobei sich der größte Teil des Schwefels flüssig abscheidet und in reiner Form erhalten werden kann.

Nachfolgend wird die Erfindung anhand dieser beiden bevorzugten Verfahren mithilfe der Zeichnungen näher erläutert.

Fig. 1 zeigt ein Flußdiagramm eines ersten erfindungsgemäßen Verfahrens.

Fig. 2 zeigt eine Variante zu dem Verfahren gemäß Fig. 1.

Durch eine Leitung 1 wird Schwefelwasserstoff oder Schwefelwasserstoff enthaltendes Gas, das möglichst frei von Kohlenwasserstoff sein sollte, in eine Reaktionskolonne 2 von oben eingeleitet, durch die eine 35 bis 40%ige Bromwasserstoffsäure mit 0,1 bis 10% Brom rieselt oder in die eine Lösung gleicher Zusammensetzung eingesprüht wird. Die Temperatur der Lösung beträgt zwischen 50 und 100°C. Sie wird durch Elektrolyse in einer Elektrolysezelle 3 hergestellt, an deren Kathode mit Chromwasserstoff gesättigter Wasserstoff entweicht. Dieser Wasserstoff steht nach einer Wäsche mit Wasser bzw. mit Kalkmilch in einer Waschkolonne 4 als Reinstwasserstoff zur Verfügung. Die verbrauchte Waschlösung aus dieser Kolonne 4 dient zur Fällung der anfallenden Schwefelsäure. Der Anolyt wird durch eine Leitung 5 in die Reaktionskolonne 2 eingeleitet. Die in dieser Kolonne gebildete Suspension feinster Schwefelteilchen in Bromwasserstoffsäure geht zunächst in den Sumpf 6 dieser Kolonne und von dort in einen großen Sedimentierungsbehälter 7, von wo aus sie in eine Druckkammer 8 gepumpt wird.

./.

Diese Druckkammer wird auf einer Temperatur von 120 bis 130°C gehalten. In ihr erfolgt eine schnelle und klare Trennung in Elektrolyt und flüssigen Schwefel, der durch eine Leitung 9 in einem Sammelbehälter 17 abgeführt wird. Die klare Elektrolytlösung wird weiter in einen Elektrolytvorratsbehälter 10 gepumpt, von dem aus sie der Elektrolysezelle 3 durch den Kathodenraum wieder zugeführt wird. Die entschwefelten und mit Bromwasserstoff gesättigten Gase werden durch den Sumpf 6 der Reaktionskolonne umgelenkt, um restliches Brom umzusetzen, und gelangen dann in eine Waschkolonne 12, in der sie mit reinem Wasser von Bromwasserstoff freigewaschen werden. Das Abgas wird durch eine Leitung 13 einer Wiederaufheizungsanlage 14 zugeführt und durch einen Kamin 15 in Freie gelassen. Vom Sumpf der Waschkolonne 12 wird verdünnte Bromwasserstoffsäure einer Destillationskolonne 16 zugeleitet, die unten konzentrierte Bromwasserstoffsäure an den Elektrolytvorratsbehälter und oben Wasser abgibt.

Wenn nötig, kann im Bereich der Abgasleitung 13 noch eine zusätzliche Abgasreinigung vorgesehen sein, z.B. eine Reinigungskolonne mit Kalkmilch bzw. grobem Calciumcarbonat oder Calciumoxid oder einem Gemenge dieser Stoffe. Die verbrauchte kalkhaltige Masse läßt sich in einem nicht dargestellten Fällungsreaktor aufarbeiten, in dem die bei dem Prozeß anfallende Schwefelsäure als Gips ausgefällt wird, der dann z.B. in einer Zentrifugalfilteranlage filtriert und gewaschen wird.

In Fig. 2 ist eine Variante zu dem Verfahren dargestellt, bei der die Reaktion von Schwefelwasserstoff mit Brom in der Gasphase abläuft. Dabei sind funktionsgleiche Teile wie in Fig. 1 mit gleichen Bezugszeichen versehen.

Schwefelwasserstoff bzw. Schwefelwasserstoff enthaltende Gase, die möglichst keine Kohlenwasserstoffe mehr enthalten und trocken sein sollten, werden mit gasförmigem Brom bzw. bromhaltigem Gas in einem Reaktor 21 bei 120 bis 150°C, vorzugsweise bei 130°C, umgesetzt. Zur Abtrennung der dabei gebildeten Schwefeltröpfchen aus den Gasen dienen mechanische Schwefelabscheider, wie sie allgemein üblich sind (siehe Ullmann's Enzyklopedie der technischen Chemie, 1982, Bd. 21). Damit läßt sich schon im Reaktor 21 der größte Teil des Schwefels in reiner Form gewinnen. An den Reaktor schließt sich ein Vorwäscher 22 an, der mit konzentrierter Bromwasserstoffsäure aus einem Elektrolytvorratsbehälter 10 gespeist wird. Der Vorwäscher dient einmal zur Kühlung auf 80 bis 100°C und zum anderen zur Abscheidung des restlichen Schwefels und Umsetzung des noch vorhandenen Broms.

Von dem Sumpf des Vorwäschers 22 wird die Säure in einen Sedimentationsbehälter 7 und von da aus in eine Druckkammer 8 gepumpt, wo der restliche Schwefel in flüssiger Form wie beim zuerst genannten Verfahren erhalten wird. Auch geringe Mengen Schwefelsäure, die bei dem Verfahren stets anfallen, werden wie bei dem erstgenannten Verfahren behandelt. Die bromwasserstoffhaltigen Gase gehen nach der Vorwäsche in einen Absorber 26, durch den in der Elektrolysezelle 3 abgereicherte Elektrolytlösung rieselt. Die weitere Behandlung erfolgt wie beim Verfahren gemäß Fig. 1.

PATENTANSPRÜCHE

1. Verfahren zur Erzeugung von Wasserstoff und Schwefel aus Schwefelwasserstoff bzw. schwefelwasserstoffhaltigen Gasen mithilfe einer Kombination einer elektrolytischen und einer chemischen Reaktion, dadurch gekennzeichnet, daß man die betreffenden Gase in einer Reaktionskolonne (2) in Gleichstrom mit bromhaltiger Bromwasserstoffsäure zur Reaktion bringt, wobei sich feinverteilter Schwefel bildet, der sich zum größten Teil im Sumpf der Reaktionskolonne bzw. in einem diesem nachgeschalteten Sedimentationsbehälter (7) sammelt, während das von Schwefelwasserstoff befreite Gas durch Umlenken im Sumpf der Reaktionskolonne von überschüssigem Brom, welches mit dem Schwefel zu Schwefelsäure reagiert, und in einer anschließenden Waschkolonne (12) mit Wasser von Bromwasserstoff gereinigt wird.

2. Verfahren nach Anspruch 1, dadurch gekennzeichnet, daß die bromhaltige Bromwasserstoffsäure durch Elektrolyse von 35 bis 48%iger wässriger Bromwasserstoffsäure hergestellt wird, wobei die Elektrolytlösung in den Kathodenraum eintritt, in dem reiner Wasserstoff entsteht, und durch ein Diaphragma in den Anodenraum fließt, wo sich das an der Anode gebildete Brom sofort löst, worauf die aus dem Anodenraum austretende bromhaltige wässrige Bromwasserstoffsäure direkt der Reaktionskolonne zugeführt wird.

3. Verfahren nach Anspruch 2, dadurch gekennzeichnet, daß der Bromgehalt der Reaktionslösung 0,1 bis 10%, vorzugsweise 3 bis 6% beträgt.

4. Verfahren nach Anspruch 2 oder Anspruch 3, dadurch gekennzeichnet, daß die Temperatur der Reaktionslösung zwischen 20 und 100°C, vorzugsweise zwischen 50 und 100°C liegt.

./.

5. Verfahren nach einem der vorhergehenden Ansprüche, dadurch gekennzeichnet, daß zeitweise mit einem deutlichen bzw. über längere Zeit mit einem geringen Bromüberschuß in bezug auf die $H_2S$-Menge in den Gasen gefahren wird, um die Verstopfung der Kolonneneinbauten und Ableitungen zu verhindern.

6. Verfahren nach einem der vorhergehenden Ansprüche, dadurch gekennzeichnet, daß die Sumpftemperatur in der Reaktionskolonne zwischen 80 und 100°C gehalten wird.

7. Verfahren nach einem der vorhergehenden Ansprüche, dadurch gekennzeichnet, daß die von $H_2S$ gereingten Gase durch einen Reaktor geleitet werden, der feinverteiltes Calciumcarbonat, Calciumhydroxid, Calciumoxid oder Gemische aus diesen Calciumverbindungen enthält, wobei der in den Gasen enthaltene Bromwasserstoff mit den genannten Verbindungen zu Calciumbromid reagiert.

8. Verfahren nach Anspruch 7, dadurch gekennzeichnet, daß das Calciumbromid sowie die verbleibenden nicht umgesetzten Calciumverbindungen in einem Zyklon abgeschieden werden und für die Fällung der in der Bromwasserstoffsäure enthaltenen Schwefelsäure in Form von Calciumsulfat verwendet werden.

9. Verfahren nach einem der vorhergehenden Ansprüche, dadurch gekennzeichnet, daß die in der Reaktionskolonne (2) enthaltene Suspension von Schwefel in Bromwasserstoff in einer Druckkammer (8) auf 120 bis 130°C erhitzt wird, wobei flüssiger Schwefel entsteht, der sich vom Elektrolyten absetzt.

10. Verfahren zur Erzeugung von Wasserstoff und Schwefel aus Schwefelwasserstoff bzw. schwefelwasserstoffhaltigen Gasen mithilfe einer Kombination einer elektrolytischen und einer chemischen Reaktion, dadurch gekennzeichnet, daß man die betreffenden Gase in einer Reaktionskolonne mit gasförmigem Brom oder Brom enthaltendem Gas bei zwischen 120 und 150°C, vorzugsweise 130°C zur Reaktion bringt, wobei direkt flüssiger Schwefel gebildet

./.

wird, der sich von der Bromwasserstoffsäure absetzt.

11. Verfahren zur Erzeugung von Wasserstoff und Schwefel aus Schwefelwasserstoff bzw. schwefelwasserstoffhaltigen Gasen mithilfe einer Kombination einer elektrolytischen und einer chemischen Reaktion, dadurch gekennzeichnet, daß der Schwefelwasserstoff bzw. die den Schwefelwasserstoff enthaltenden Gase mit gasförmigem Brom bzw. bromhaltigen Gasen in der Gasphase in einer Reaktionskolonne bei zwischen 120 und 150°C, bevorzugt 130°C zur Reaktion gebracht werden, wobei das dabei entstehende Gas, das S, HBr und $S_2Br_2$ enthält, durch eine Kolonne mit konzentrierter Bromwasserstoffsäure geführt wird, wo es auf 80 bis 100°C abgekühlt wird und wo sich der restliche Schwefel abscheidet und überschüssiges Brom bzw. $S_2Br_2$ umgesetzt werden, und daß dann das Gas in eine Kolonne geleitet wird, wo der in dem Gas enthaltene Bromwasserstoff in aus der Elektrolysezelle kommender abgereicherter Bromwasserstoffsäure absorbiert wird und in einer Waschkolonne mit Wasser und/oder in einem feinverteilte Calciumsalze enthaltenden Reaktor von Bromwasserstoff befreit wird.

12. Verfahren nach Anspruch 11, dadurch gekennzeichnet, daß das gasförmige Brom durch Destillation des Anolyten gewonnen wird.

13. Verfahren nach Anspruch 11 und 12, dadurch gekennzeichnet, daß man das bromhaltige Gas erhält, indem man Luft oder ein anderes Gas, das nicht mit Brom reagiert, z.B. Stickstoff, durchleitet.

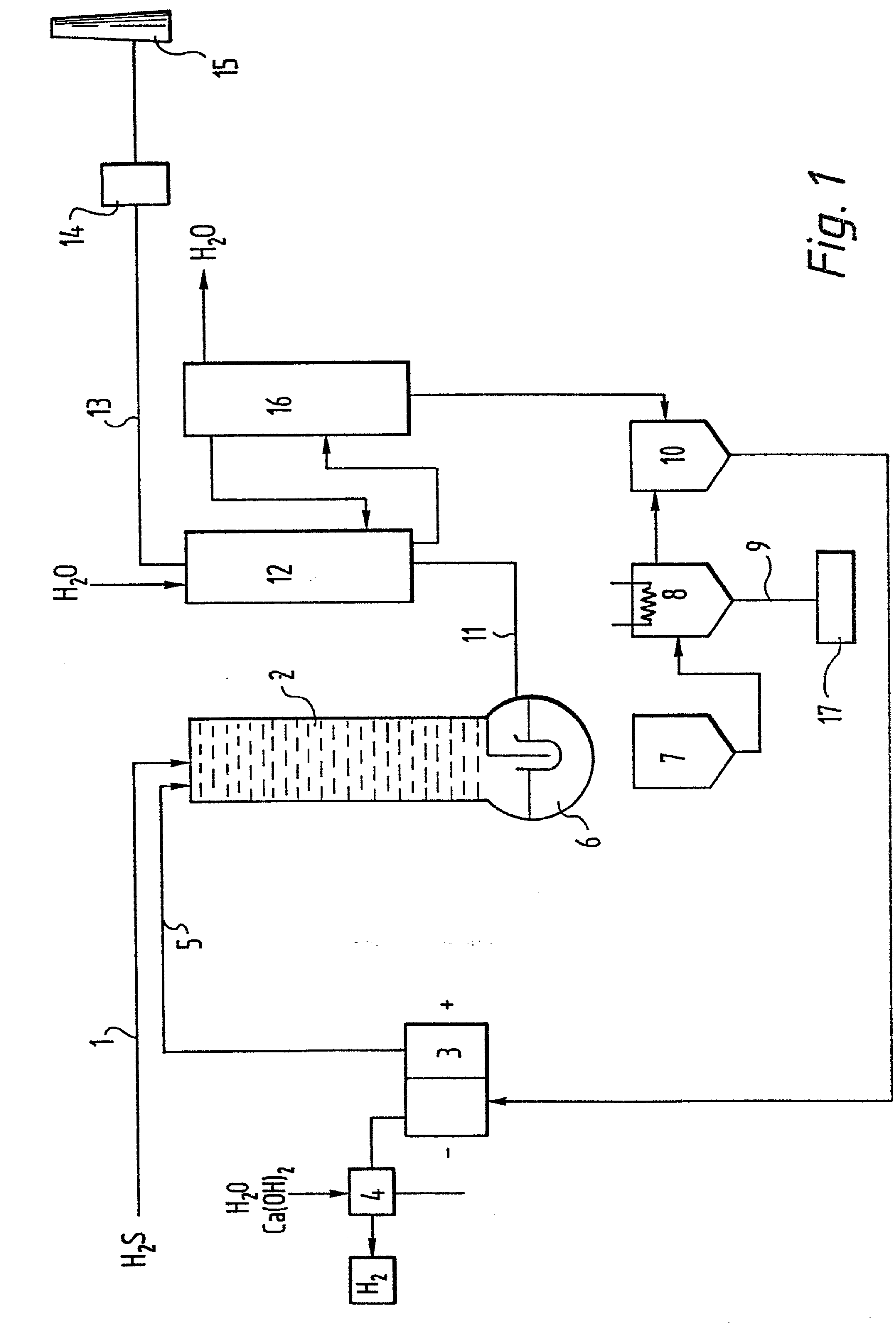


Fig. 1

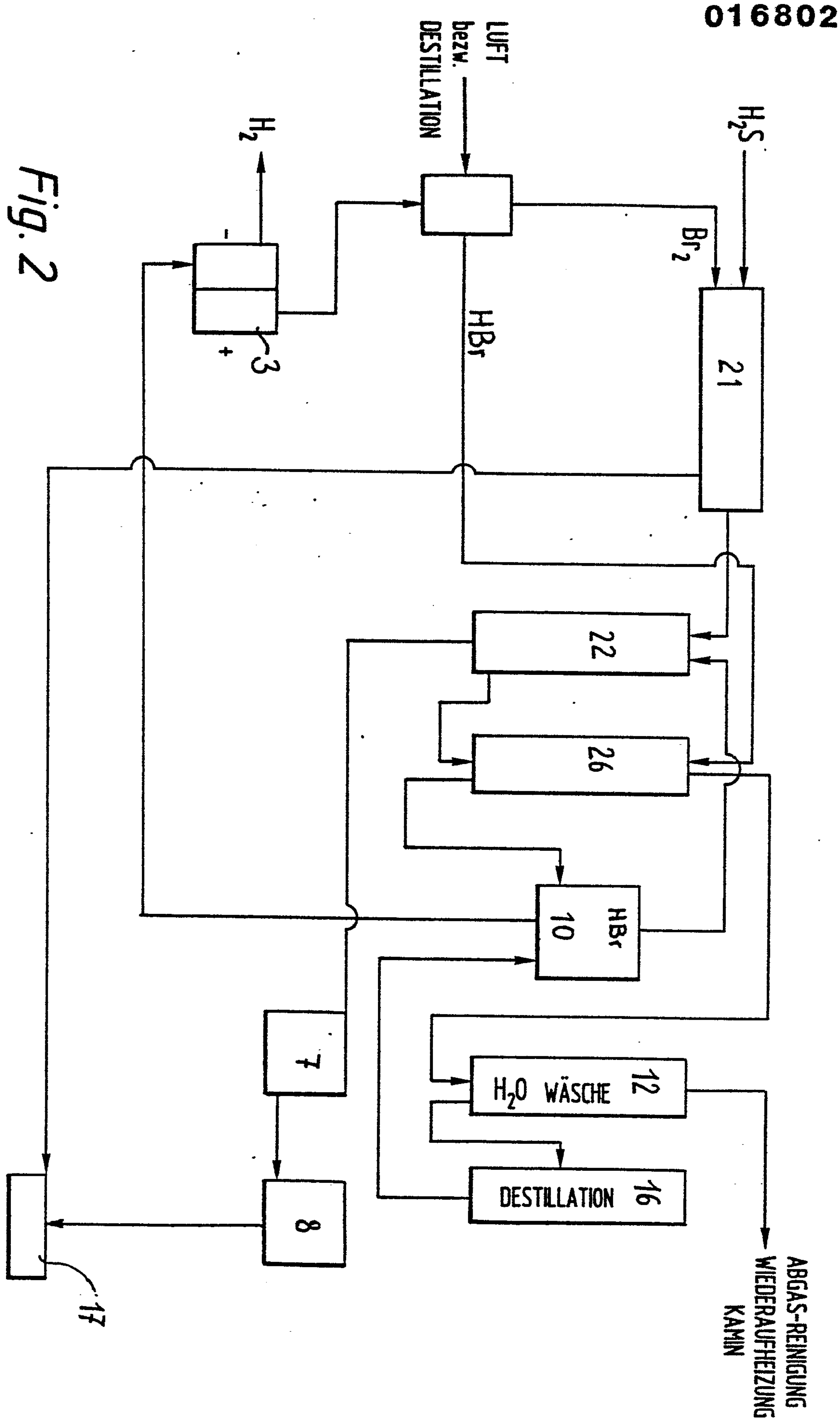
LUFT
bezw.
DESTILLATION
$H_2$
$H_2S$
$Br_2$
HBr
-
+
3
21
22
26
HBr
10
7
8
17
$H_2O$ WÄSCHE 12
DESTILLATION 16
ABGAS-REINIGUNG
WIEDERAUFHEIZUNG
KAMIN

Fig. 2